# EUROPEAN PATENT APPLICATION

(11) **EP 2 556 969 A1**
(43) Date of publication of application: **13.02.2013**
(21) Application number: 10849272.9
(22) Date of filing: 15.04.2010
(51) Int. Cl.: B60B 27/02

(54) **BICYCLE HUB STRUCTURE**

(30) Priority: 09.04.2010 CN 201010142924
(71) Applicant: Lin, Wen-Hwa, Taichung Hsien (TW)
(72) Inventor: Lin, Wen-Hwa, Taichung Hsien (TW)
(74) Representative: Viering, Jentschura & Partner
(86) International application number: PCT/CN2010/071783
(87) International publication number: WO 2011/124035

(57) **Abstract**

A bicycle hub assembly includes a hub body mounted around an axial core. The hub body has one end containing a ratchet ring that has an inner periphery formed with unidirectional ratchet teeth. A ratchet wheel is arranged between the axial core and the ratchet ring and has an outer periphery formed with detent recesses, each said detent recess receiving therein a detent for engaging with the ratchet teeth. The detent includes a pivot portion and a swinging arm. The pivot portion is retained by the detent recess and has an arc of 180 to 270 degrees so that the swinging arm swings when the pivot portion rotates in the detent recess. The detent has clenching surfaces for engaging with the ratchet teeth, wherein a direction where the clenching surface extends is identical to a swinging direction of the swinging arm.

## Description

### TECHNICAL FIELD

The present invention relates to bicycle hubs, and more particularly, to a bicycle hub assembly with a heavy-duty ratchet system.

### DESCRIPTION OF RELATED ART

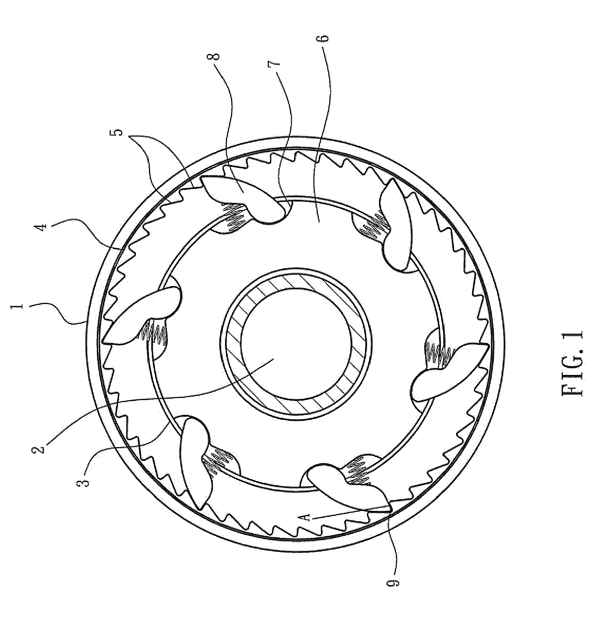

A conventional bicycle hub body, as shown in **Figure 1****,** includes primarily a hub body **1** mounted around an axial core **2.** The axial core **2** has one end provided with a sleeve **3.** Each of the hub body **1 and** the sleeve **3** connects with the axial **core 2** through a bearing. The hub body **1** contains therein a ratchet ring **4,** whose inner periphery provided with a plurality of unidirectional ratchet teeth **5.** The ratchet ring **4** circles a ratchet wheel **6** whose outer periphery is formed with a plurality of detent recesses **7**, each receiving a detent **8** therein. When the sleeve **3** rotates forward, the centrifugal force drives the detent **8** to swing in the same direction to engage with the ratchet teeth **5,** thereby driving the hub body **1** to rotate unidirectionally.

However, in the prior art, the detent **8** has one big cape, so it needs to swing relatively far to engage with the ratchet teeth **5.** This means that the engagement between the detent **8** and the ratchet teeth **5** requires more time, and in turn means that the reaction of the detent **8** is relatively slow. In addition, since the detent **8** has a pointed cape for reacting with the ratchet teeth **5,** the acting force caused by the interaction between the clenching surface **9** of the detent **8** and the ratchet teeth **5** is to pass through the outer lateral of the detent **8** (Plane A in **Figure 1****),** but not to pass through the axis of the detent **8.** Thus, the detent **8** bears the load solely with its own structure and cannot transfer the load to the detent recess **7.** However, in view of designing limitations to the detent **8** and the ratchet wheel **6,** the detent 8 is limited in thickness, meaning that it is limited in load bearing capacity. When the load acting at the outer lateral of the detent **8** exceeds the load bearing limit of the detent **8,** the detent **8** is likely to break or crack. Particularly, in the case of heavy pedaling or emergency brake, the detent **8** and the ratchet teeth **5** may break or crack under strong impacts.

As described above, the conventional bicycle hub typically has its detent formed with a single big cape for engaging with the ratchet teeth, so the reaction of the detent is slow. Besides, the detent is not properly shaped so the detent is weak in bearing loads and likely to break or crack. In view of the problems to be overcome, the present invention herein proposes a bicycle hub assembly.

### SUMMARY OF THE INVENTION

The objective of the present invention is to provide a bicycle hub assembly that overcomes the defects of the prior art by increasing the contacting area between its detent and ratchet teeth and increasing the area where the ratchet wheel bears the detent, so as to improve the load bearing capability and reliability, thereby ensuring riding safety.

To this end, the present invention discloses herein a bicycle hub assembly, which comprises a hub body mounted around an axial core, the hub body having one end containing a ratchet ring, the ratchet ring having an inner periphery formed with a plurality of unidirectional ratchet teeth, a ratchet wheel arranged between the axial core and the ratchet ring having an outer periphery formed with a plurality of detent recesses, each said detent recess receiving therein a detent that is configured to engage with the ratchet teeth, and the bicycle hub assembly being characterized in:
the detent including a pivot portion and a swinging arm extended from the pivot portion, the pivot portion being retained by the detent recess, the pivot portion having an arc of 180 to 270 degrees so that the swinging arm is allowed to swing when the pivot portion rotates in the detent recess, and the detent having a plurality of clenching surfaces for engaging with the ratchet teeth, wherein a direction where the clenching surface extends is identical to a swinging direction of the swinging arm.

Therein, a leaning surface is defined between each two adjacent said clenching surfaces, while the ratchet teeth each has a front slope for engaging with the clenching surface, and the ratchet teeth each has a back slope for engaging with the leaning surface.

Therein, a counter force generated when the clenching surface pushes against the ratchet tooth is directed to the pivot portion.

Therein, a spring member is provided between the detent recess and the swinging arm to normally prop up the detent to make the detent engage with the ratchet teeth.

Therein, the detent is formed with a fixing hole for receiving and holding the spring member.

With the foregoing configuration, the disclosed bicycle hub assembly provides the following technical effects:
1. By designing the shapes, contours and number of the cape of the detent, the present invention increases the contacting area between the detent and the ratchet teeth, thereby improving the reaction of the detent and enhancing the engagement between the components.
2. Since the direction where the clenching surface extends is identical to the swinging direction of the swinging arm, the detent can engage with and depart from the ratchet teeth with improved smoothness.
3. The arced pivot portion helps to increase the contacting area between the detent recess and the detent. This allows the pivot portion to settle in the detent recess firmly, and this in turn helps to enhance the capability of the detent recess of carrying the detent.
4. Since the normal of the clenching surface passes through the pivot portion, the force will be focused on the contacting area between the detent and the detent recess, allowing the detent recess to provide an enlarged bearing surface to bear the detent, thereby significantly improving the load bearing capability of the detent recess.

The following preferred embodiments when read with the accompanying drawings are made to clearly exhibit the above-mentioned and other technical contents, features and effects of the present invention. Through the exposition by means of the specific embodiments, people would further understand the technical means and effects the present invention adopts to achieve the above-indicated objectives. However, the accompanying drawings are intended for reference and illustration only and are not made to scale in terms of dimensions, deformation and/or displacement. Unless otherwise noted, like elements will be identified by identical numbers throughout all figures.

### BRIEF DESCRIPTION OF THE DRAWINGS

**Figure 1** depicts a conventional bicycle hub.
**Figure 2** is an exploded view of the present invention.
**Figure 3** is a perspective view of the present invention.
**Figure 4** schematically illustrates the present invention wherein the ratchet ring is rotating forward.
**Figure 5** schematically illustrates the present invention wherein the ratchet ring is rotating backward.
**Figure 6** is a partial, enlarged view of **Figure 5****.**

### DETAILED DESCRIPTION OF THE INVENTION

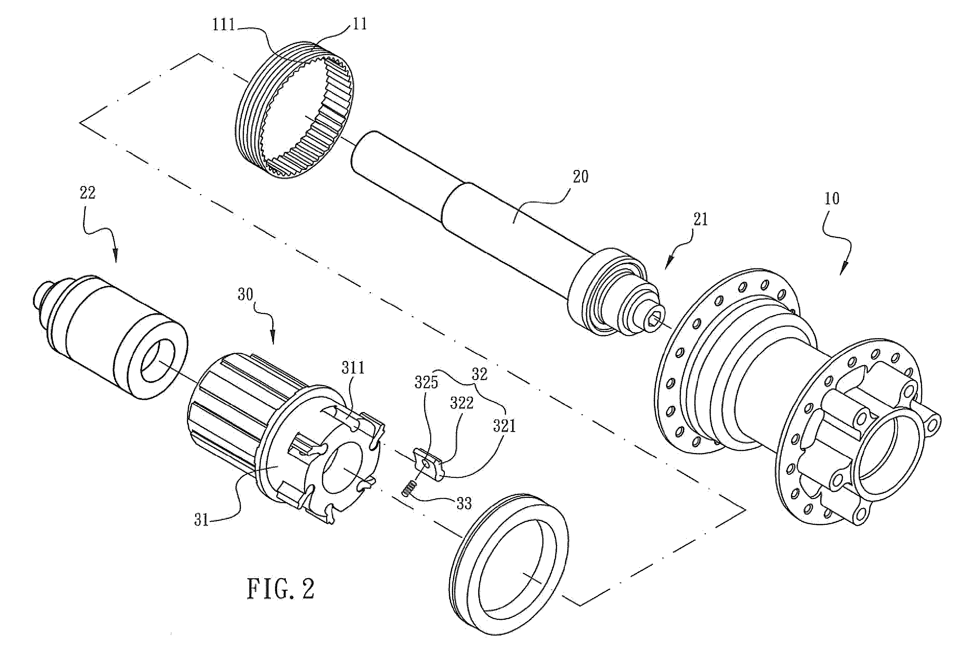

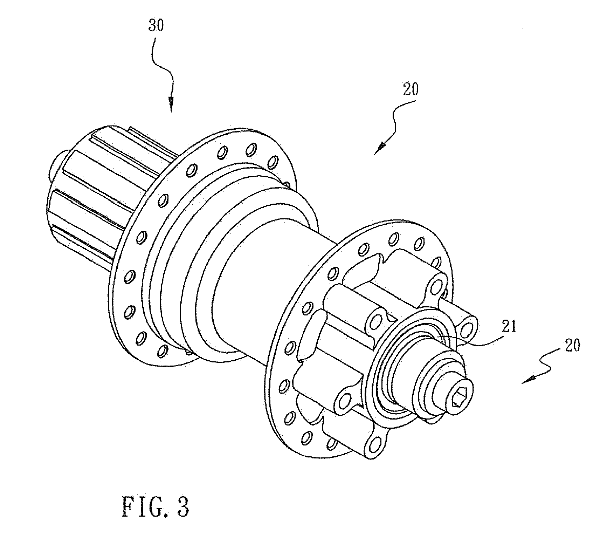

As shown in **Figure 2** through **Figure 4****,** the present invention provides a bicycle hub assembly, which primarily comprises a hub body **10,** an axial core **20** and a sleeve **30.**

The hub body **10** is a hollow shaft having an axial through hole and is mounted around the axial core **20.** The hub body **10** contains at least one bearing **21** for connecting it with the axial core **20,** so that the hub body **10** is allowed to rotate with respect to the axial core **20.** The hub body **10** has one end internally provided with a ratchet ring **11,** whose inner periphery is formed with a plurality of unidirectional ratchet teeth **111.** Each said ratchet tooth **111** defines a front slope **112** and a back slope **113** that connects with the front slope **112** of one adjacent said ratchet tooth **111.**

The sleeve **30** is also structurally a hollow shaft having an axial through hole and is mounted around the axial core **20** for connecting with the hub body **10**. The sleeve **30** contains therein at least one bearing **22** for connecting it with the axial core **20.**

A ratchet wheel **31** is arranged between the axial core **20** and the ratchet ring **11,** The ratchet wheel **31** has is outer periphery formed with a plurality of detent recesses **311.** In each said detent recess **311,** there is a detent **32** provided. The detent **32** has plural clenching surfaces **323** for engaging with the front slopes **112** of two adjacent said ratchet teeth **111.** The detent **32** is composed of a pivot portion **321** and a swinging arm **322** extended from the pivot portion **321** that is pivotally received in the detent recess **311.** The pivot portion **321** includes an arc between 180 and 270 degrees, so that the swinging arm **322** swings when the pivot portion **321** rotates in the detent recess **311.** A spring member **33** is installed in each said detent recess **311.**

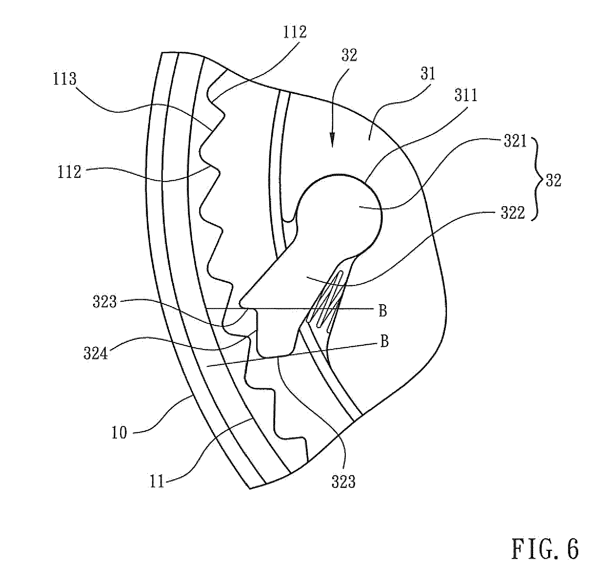

Between the two clenching surfaces **323,** a leaning surface **324** is defined. Each of the ratchet teeth **111** engages with the clenching surface **323** with its front slope **112**. Also, the back slope **113** of the ratchet tooth **111** is made to engage with the leaning surface **324.** Therein, the direction where the clenching surface **323** extends (Plane B in **Figure 6****)** is identical to the swinging direction of the swinging arm **322** and the normal crf the clenching surface **323** passes through the pivot portion **321.** The detent **32** is provided with a fixing hole **325** for receiving and holding the spring member **33,** so that the spring member **33** normally props up the detent **32** to make the detent **32** engage with the ratchet teeth **111.**

With the understanding to the foregoing configuration, the reader will learn the operation of the disclosed subject matter and its underlying principles through the following description.

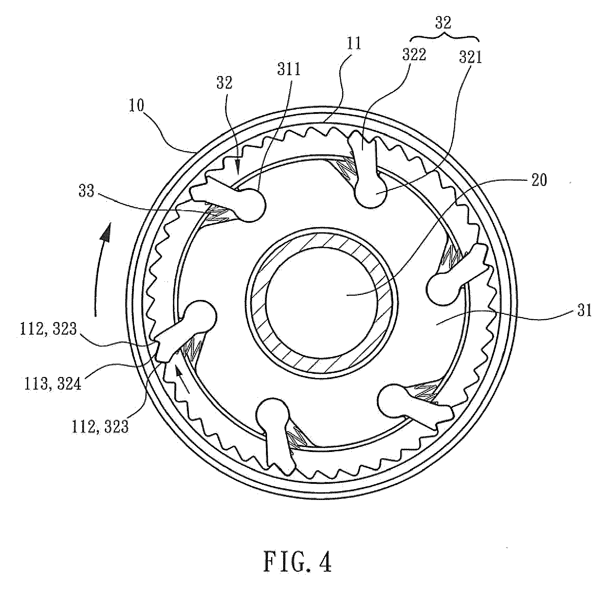

As shown in **Figure 4****,** when the associated bicycle pedal (not shown) is pedaled forward, the associated chain (not shown) drives the sleeve **30** and in turn the ratchet ring **11** to rotate, so that the detents **32** move under the centrifugal force. At this time, as the spring member **33** props up the swinging arm **322,** the swinging arm **322** has the pivot portion **321** rotating in the detent recess **311,** making the clenching surface **323** engaging with the corresponding front slope **112**, thereby driving the ratchet wheel **31** and in turn the hub body **10** to rotate, so the bicycle moves forward.

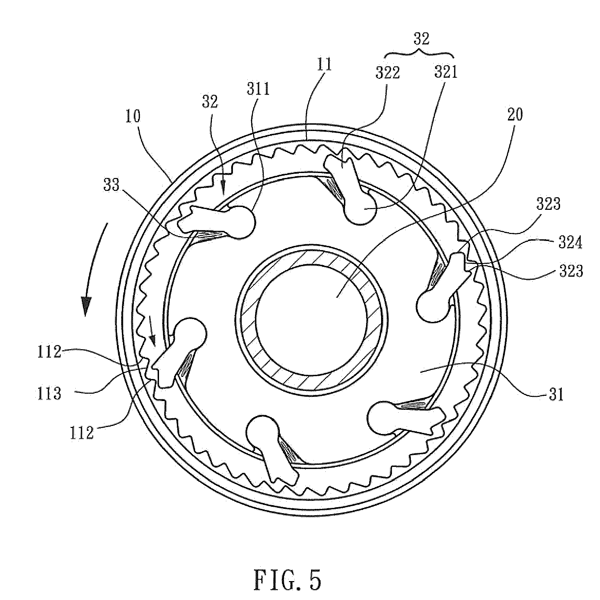

As shown in **Figure 5****,** when the associated bicycle pedal (not shown) is pedaled backward, the associated chain (not shown) drives the sleeve **30** and in turn the ratchet ring **11** to rotate reversely. As the back slope **113** pushes the leaning surface **324,** the detent **32** swings toward the spring member **33,** so the spring member **33** is compressed to allow the clenching surface **323** to depart from the front slope **112.** As a result, the ratchet ring **11** rotates idly without driving the ratchet wheel **31** as well as the hub body **10.**

As shown in **Figure 4** through **Figure 6****,** since the detent **32** has at least two capes, as compared with the foregoing prior art, the capes in the detent **32** are smaller, so the swinging arm **322** needs only to swing for a halved amount of degrees to engage with the ratchet teeth **111**. This is helpful to reduce the time taken by engaging the detent **32** with the ratchet teeth **111,** so the detent **32** can react more rapidly and the resulting engagement is firmer. In addition, since the direction where the clenching surface **323** extends is identical to the swinging direction of the swinging arm **322,** the detent **32** can engage with and depart from the ratchet teeth **111** with improved smoothness.

The arc of the pivot portion **321** is of between 180 and 270 degrees, so the contacting area between the detent recess **311** and the detent **32** is significantly increased as compared with the prior art. This allows the pivot portion **321** to settle in the detent recess **311** firmly without the risk of falling out of the detent recess **311** during its rotation, and this in turn helps to enhance the capability of the detent recess **311** of carrying the detent **32.**

With the designed direction of the clenching surface **323,** a counter force generated when the clenching surface 323 pushes against the ratchet tooth 111 is directed to the pivot portion 321, so the force will be focused on the contacting area between the detent 32 and the detent recess 311, allowing the detent recess 311 to provide an enlarged bearing surface to bear the detent 32, thereby significantly improving the load bearing capability of the detent recess 311. This prevents the detent 32 from getting cracked or broken when it receives impacts that exceed its own impact resistance.

To sum up, the present invention increases the contacting area between the detent recess 311 and the detent 32 by designing the shapes, contours and number of the cape of the detent 32, increasing the contacting area between the detent recess 311 and the detent **32,** so as to increase the stressed areas of the two components, thereby improving the capability of the detent recess **311** of bearing the detent **32,** and in turn increasing the contacting area between the detent **32** and the ratchet teeth **111.** As a result, the reaction of the detent **32** is improved and engagement of the detent recess **311** and the detent **32** is more reliable.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A bicycle hub assembly comprising a hub body mounted around an axial core, the hub body having one end containing a ratchet ring, the ratchet ring having an inner periphery formed with a plurality of unidirectional ratchet teeth, a ratchet wheel arranged between the axial core and the ratchet ring having an outer periphery formed with a plurality of detent recesses, each said detent recess receiving therein a detent that is configured to engage with the ratchet teeth, and the bicycle hub assembly being **characterized in**:
the detent including a pivot portion and a swinging arm extended from the pivot portion, the pivot portion being retained by the detent recess, the pivot portion having an arc of 180 to 270 degrees so that the swinging arm is allowed to swing when the pivot portion rotates in the detent recess, and the detent having a plurality of clenching surfaces for engaging with the ratchet teeth, wherein a direction where the clenching surface extends is identical to a swinging direction of the swinging arms

2. The bicycle hub assembly of Claim 1, being **characterized in that** a leaning surface is defined between each two adjacent said clenching surfaces, while the ratchet teeth each has a front slope for engaging with the clenching surface, and the ratchet teeth each has a back slope for engaging with the leaning surface.

3. The bicycle hub assembly of Claim 1, being **characterized in that** a counter force generated when the clenching surface pushes against the ratchet tooth is directed to the pivot portion.

4. The bicycle hub assembly of Claim 1, being **characterized in that** a spring member is provided between the detent recess and the swinging arm to normally prop up the detent to make the detent engage with the ratchet teeth.

5. The bicycle hub assembly of Claim 3, being **characterized in that** the detent is formed with a fixing hole for receiving and holding the spring member.
